# EUROPEAN PATENT SPECIFICATION

(11) **EP 2 269 469 B1**
(45) Date of publication and mention of the grant of the patent: **12.04.2017**
(21) Application number: 10165379.8
(22) Date of filing: 09.06.2010
(51) Int. Cl.: A23G 9/04, A23G 9/28

(54) **Crushed-ice drink maker**
Getränkehersteller mit zerstoßenem Eis
Appareil de fabrication de boissons à base de glace pilée

(30) Priority: 29.06.2009 IT BO20090416
(43) Date of publication of application: 05.01.2011
(73) Proprietor: Carpigiani Group - ALI S.p.A., 40011 Anzola Dell'Emilia (BO) (IT)
(72) Inventor: Escriva Estruch, Vicente, 40011 Anzola Dell'Emilia (Bologna) (IT); Cocchi, Gino, 40011 Anzola Dell'Emilia (Bologna) (IT)
(74) Representative: Bianciardi, Ezio

(56) References cited:
- EP-A- 1 669 322
- EP-A- 1 731 039
- WO-A-01/25135
- WO-A-01/30683
- WO-A-90/06896
- WO-A-97/38589
- WO-A-98/31238
- WO-A-03/017776
- GB-A- 1 075 848
- JP-A- 2007 254 002
- US-A- 3 330 129
- US-A- 3 756 473
- US-A- 3 777 937
- US-A- 5 205 129
- US-B1- 7 152 765

## Description

This invention relates to a crushed-ice drink maker.

In the context of this invention the term "crushed-ice drink maker" denotes a machine especially designed to produce and dispense iced drinks such as granitas, slush drinks and the like.

Generally speaking, crushed-ice drink makers known up to the present comprise a transparent tank in which a drink that will be dispensed in the form of a granita, slush drink, smoothie or the like is mixed and chilled. The product is dispensed through a tap located near the bottom of the tank itself.

The drink usually consists of a mixture of water or milk and a syrup or flavouring powders which give the drink the desired taste and colour.

It is very common to place two or more crushed-ice drink makers side by side, each machine dispensing a differently flavoured iced drink. **Devices such as the one disclosed by document** US 5205129A **are also known.**

When two different drinks need to be mixed, however, it is necessary to dispense each drink separately one after the other from two different crushed-ice drink makers and then mix the two together to obtain the desired drink. This may be done, for example, by filling half a glass cup with one drink, adding the other drink to fill the glass cup completely and then mixing the two together. Besides being time-consuming and awkward, this procedure involves mixing the drink after dispensing, with the risk of spilling if the glass cup has been filed too much.

Moreover, it is rather difficult to measure the proportions of the two drinks exactly and excesses of one or the other can seldom be remedied without throwing away part of the drink that has been dispensed. In effect, dispensing an excess quantity of one of the two drinks may make it impossible to obtain the required proportion between the two drinks, for example if too much of the first drink has been dispensed into the glass cup.

In this context, the technical purpose which forms the basis of the present invention is to propose a crushed-ice drink maker which overcomes the above mentioned drawbacks of the prior art.

More specifically, this invention has for an aim to provide a crushed-ice drink maker that allows a drink consisting of two differently flavoured drinks to be dispensed quickly and easily.

Another aim of the invention is to provide a crushed-ice drink maker which offers a high level of operating flexibility.

The technical purpose indicated and the aims specified are substantially achieved by a crushed-ice drink maker comprising the technical features described in one or more of the appended claims. Further features and advantages of this invention are more apparent in the detailed description below, with reference to a preferred, non-limiting embodiment of a crushed-ice drink maker, illustrated in the accompanying drawings, in which:
- Figure 1 is a perspective view of a crushed-ice drink maker according to this invention;
- Figure 2 is a front view of a portion of the crushed-ice drink maker of Figure 1;
- Figure 3 is an enlarged perspective view of a detail of the crushed-ice drink maker of Figure 1;
- Figure 4 is a perspective view of a part of the crushed-ice drink maker of Figure 1 with some parts cut away in order to better illustrate others;
- Figure 5 is a perspective view of the part of the crushed-ice drink maker of Figure 4 with some parts cut away in order to better illustrate others;
- Figure 6 is a perspective view, partly in cross section through a vertical plane, of the part of the crushed-ice drink maker of Figure 4 with other parts cut away in order to better illustrate others;
- Figure 7 is a perspective exploded view of a component of the crushed-ice drink maker according to this invention;
- Figures 8 to 10 are perspective representations of the component of Figure 7 in a sequence of successive operating positions.

With reference to the accompanying drawings, the numeral 1 denotes in its entirety a crushed-ice drink maker according to this invention.

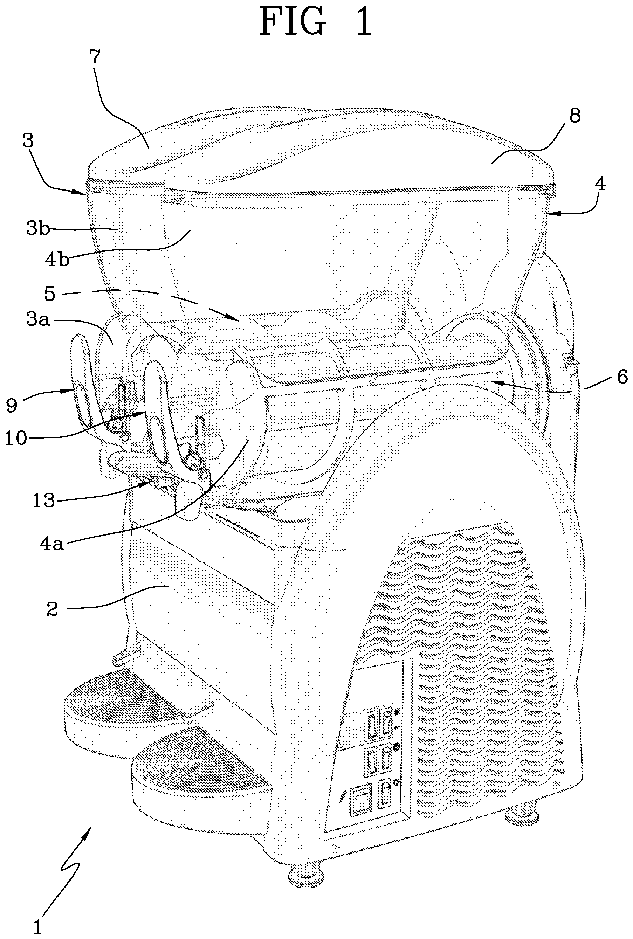

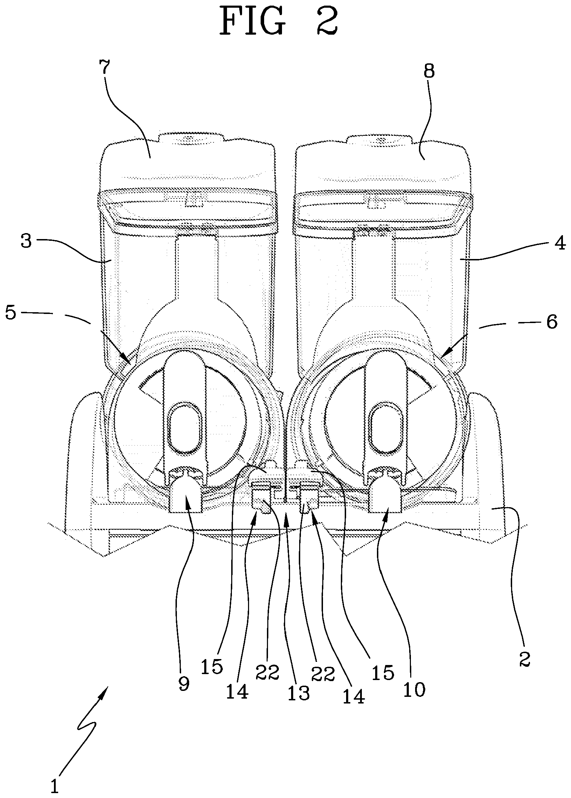

As shown in Figures 1 and 2, the crushed-ice drink maker 1 comprises a base 2 and two tanks 3, 4 mounted above the base 2 and each forming a freezing chamber for containing a drink generally composed of water or milk with added syrup or flavouring powders to make granitas, slush drinks, smoothies and the like.

Each tank houses chilling and stirring means 5, 6 of known type and preferably comprising an evaporator cylinder equipped on the outside of it with a screw that rotates about a horizontal axis of rotation. The chilling and stirring means 5, 6 are designed to lower the temperature of the drink until it has the partly iced texture typical of granitas, slush drinks, smoothies and the like.

The evaporator cylinder forms part of a refrigerating system whose other parts and respective adjustment means are housed inside the base 2 of the crushed-ice drink maker 1.

Further, each tank 3, 4 is closed at the top by a lid 7, 8 which can be removed to enable the drink to be topped up.

Each tank 3, 4 is formed by a lower portion 3a, 4a, substantially cylindrical in shape and substantially shaped to accommodate the envelope defined by the outer shape of the screw, and an upper portion 3b, 4b, substantially box-shaped, forming a tank for receiving and collecting the drink fed to the crushed-ice drink maker 1.

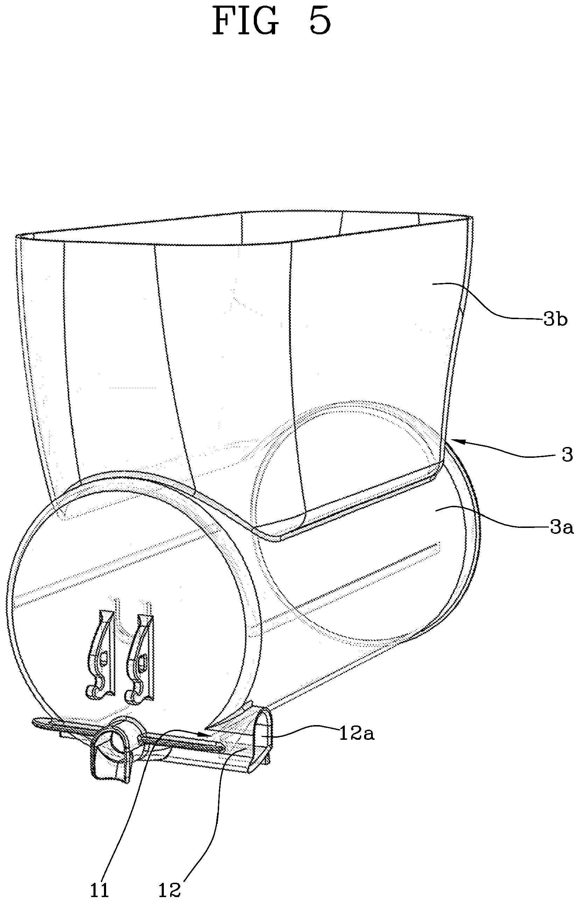

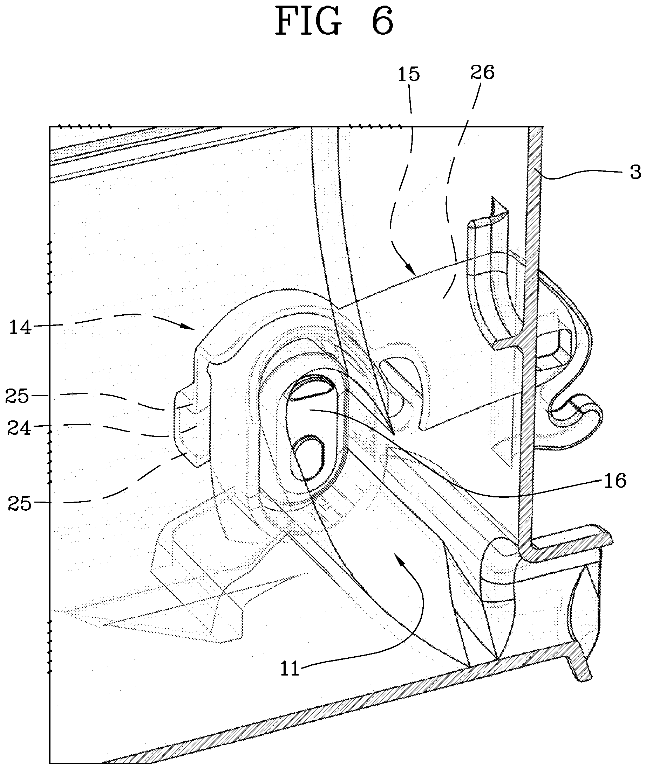

At the front of it, each tank 3, 4 has a customary dispenser 9, 10. The dispenser 9, 10 is applied to the lower portion 3a, 4a of the respective tank 3, 4 and, more specifically, to a front surface of the lower portion 3a, 4a, that is to say, a surface perpendicular to the axis of rotation of the screw. The two tanks 3, 4 are positioned stably side by side along their side walls in a position such that the axes of rotation of the screws are parallel. Advantageously, as shown in Figures 5 and 6, each tank 3, 4 comprises an opening 11, preferably lateral, that is to say, directed towards the other tank 3, 4 and, preferably, facing the opening 11 of the other tank 3, 4. Leading out from the opening 11 there is a connecting duct 12 which is preferably made as one with the respective tank 3, 4. The connecting duct 12 protrudes relative to the outer shape of the respective tank 3, 4, and, more specifically, relative to the substantially cylindrical outer shape of the lower portion 3a, 4a of the tank 3, 4, to cover at least partially the distance that separates the opening 11 of the tank 3 from the opening 11 of the other tank 4.

The two connecting ducts 11 are preferably aligned along the same direction, that is to say, they extend about the same axis.

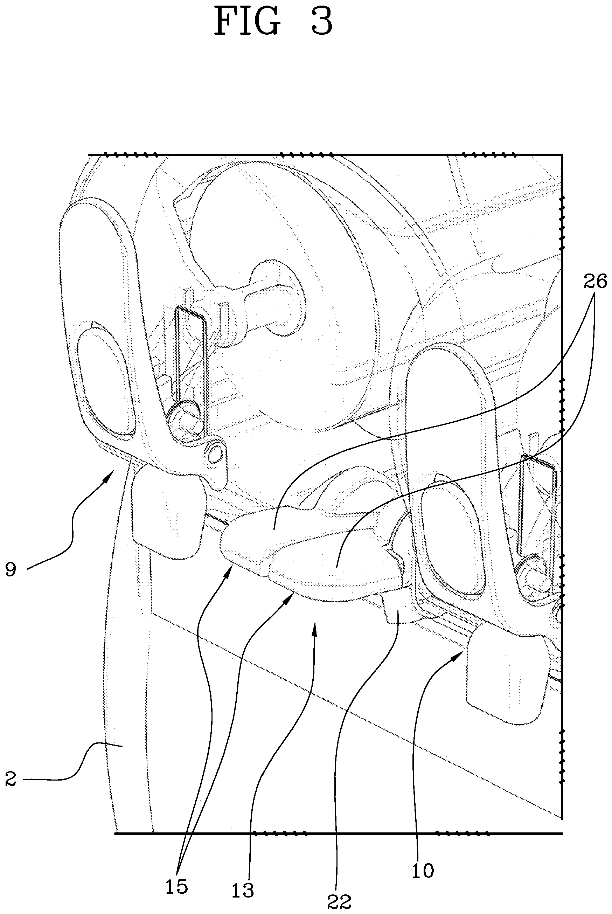

Advantageously, the two connecting ducts 11 lead to a shared dispenser 13 which, together with the two dispensers 9, 10, forms a third dispenser (Figure 3).

Preferably, in the embodiment described above and as shown in Figure 2, the shared dispenser 13 is located at an intermediate position between the two tanks 3, 4.

Advantageously, the shared dispenser 13 allows dispensing of a ready-mixed drink comprising both the drinks contained in the two different tanks 3, 4.

Each connecting duct 12 extends from a respective tank 3, 4 to the shared dispenser 13 to place the latter in fluid communication with the tanks 3, 4. The connecting ducts 12 are preferably horizontal (Figures 5 and 6).

Advantageously, the crushed-ice drink maker 1 comprises valve means for opening and closing the drink flow in each connecting duct 12 so as to adjust the dispensing of the drinks through the shared dispenser 13.

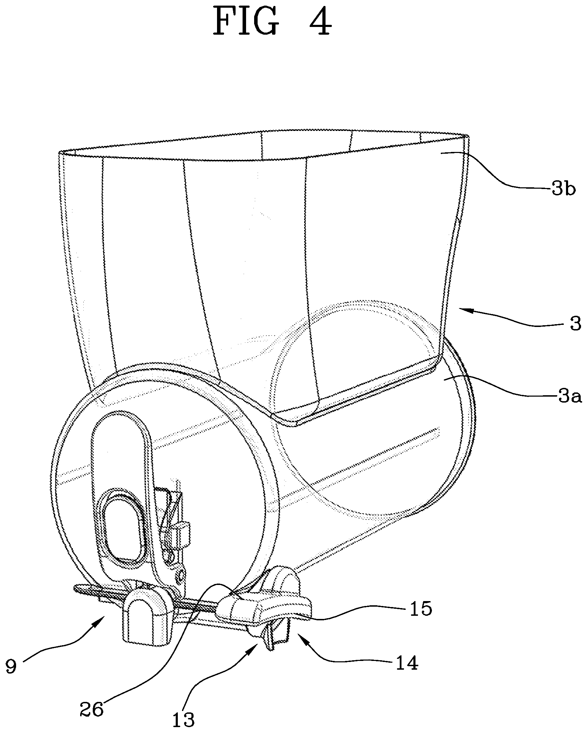

The valve means are illustrated in detail in Figure 4 and in Figures 6 to 10.

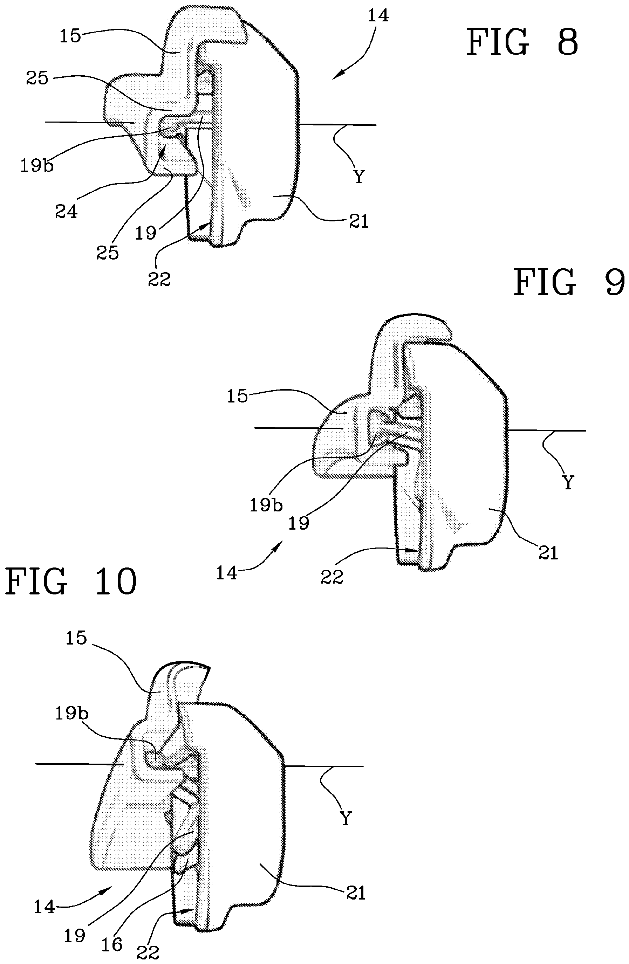

The valve means comprise, for each connecting duct 12, a valve 14 that can be set to a plurality of operating configurations included between a closed configuration (Figure 8) where it completely obstructs the flow of the drink in the respective connecting duct 12, and an open configuration (Figure 10) where it allows the drink to flow through the connecting duct 12 so it can be dispensed.

The valve 14 is applied to an end portion of the connecting duct 12 on the opposite side relative to the tank 3, 4.

The two connecting ducts 12 have respective outfeed sections 12a which are substantially opposite each other and therefore the two valves 14 are positioned side by side.

The intermediate operating configurations of the valve 14, one of which is illustrated in Figure 9, include at least one configuration where the transit section for the drink is reduced relative to the open configuration. In other words, the intermediate operating positions of the valve 14 constitute the different degrees to which the dispensing of the drink can be partialized.

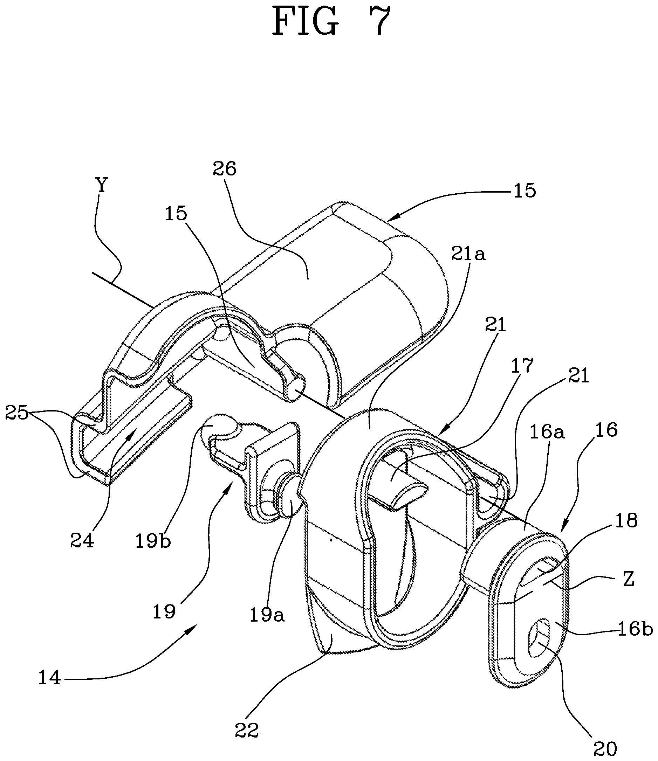

The structure of the valve 14 is shown in detail in Figure 7.

The valve 14 comprises a connector 21 which can be stably connected, for example by interference, to the above mentioned end portion of the connecting duct 12. More specifically, the connector 21 has a coupling flange that can be press fitted over the above mentioned end portion of the connecting duct 12.

The transit section of the connector 21 forms an opening through which the drink flows out of the connecting duct 12 to the outside.

The connector 21 comprises, on a lower outfeed portion of it, a dispensing spout 22 forming a chute for facilitating the outflow of the drink dispensed from the tank 3, 4 towards a glass cup below.

In the assembled configuration (Figure 2), the two spouts 22 are directed towards each other and jointly delimit a single shared outlet section (or dispensing duct) for dispensing the mixed drink into a glass cup below.

In the assembled configuration, the two spouts 22 may touch each other or they may be spaced from each other to delimit only partly a shared, substantially vertical, outfeed duct downstream of the connecting ducts 12. Inside the shared outfeed duct the two drinks, if drawn simultaneously, can be mixed before actually being dispensed into the container (glass cup) below. In that case, the drink is dispensed in a ready-mixed form.

Each valve 14 comprises an elastically deformable body 16 whose shape is such as to fully block in sealed fashion the above mentioned transit section of the connector 21. The deformable body is made as a single piece of elastomeric material, preferably silicone, and is made as a single piece by a co-moulding process.

The deformable body 16 forms a closing element for the respective connecting duct 12.

The deformable body 16 has a first, upper portion 16a, which can be stably fastened to the connector 21 and, more specifically, to an upper portion of the connector 21. For this purpose, as shown in Figure 7, the connector 21 has a longitudinal projection 17 which can be stably engaged in a corresponding first hole 18 in the first portion 16a of the deformable body 16. In the assembled configuration, (Figure 6), the deformable body 16 is stably fixed to the connector 21 and thus to the connecting duct 12 by securely inserting the longitudinal projection 17 of the connector 21 into the first hole 18 in the first portion 16a of the deformable body 16.

The deformable body 16 has a second portion 16b which is integral with the first portion 16a and movable relative to the latter by elastic deformation of the deformable body 16 about a joining line Z. The joining line Z is preferably deformable.

By bending about the joining line Z, the second portion 16b of the deformable body 16 is adapted to form the above mentioned open, closed and intermediate configurations of the valve 14. The second portion 16b is shaped substantially to match the above mentioned transit section of the connector 21 so as to close and seal the transit section to prevent the drink from leaking when the valve 14 is in the closed configuration.

Each valve 14 further comprises an actuator element 15, preferably in the form of a rotatable lever, which a user can operate manually, and which acts on the deformable body 16 in such a way as cause the valve 14 to adopt the above mentioned open, closed and intermediate configurations. Advantageously, the actuator element 15 is of a type adapted to continuously adjust the change in configuration of the valve 14, in such a way as to create a plurality of intermediate configurations included between the open configuration and the closed configuration.

The lever 15 is preferably rotatable about a horizontal tilting axis Y so the user can easily press it to start dispensing the respective drink. Rotation of the lever 15 about the tilting axis Y is obtained through a rotatable coupling between a cylindrical portion 15a of the lever 15 and a matching cylindrical cavity 21a of the connector 21 in which the above mentioned cylindrical portion 15a of the lever 15 is inserted.

Preferably, the tilting axis Y of the lever 15 is transversal, and still more preferably, perpendicular, to the joining line Z about which the second portion 16b of the deformable body 16 is deformed.

More specifically, the lever 15 is movable between a home position, illustrated in Figure 8, corresponding to the valve 14 closed configuration, and a dispensing position, illustrated in Figure 10, corresponding to the valve 14 open configuration. The lever 15 can also adopt a plurality of positions between the home and dispensing positions, corresponding to the above mentioned plurality of valve 14 intermediate configurations, one of which is illustrated in Figure 9. The position of the lever 15 shown in Figure 9 is rotated by an intermediate angle between the closed and open positions shown in Figures 8 and 10.

The second portion 16b of the deformable body 16 is connected to the lever 15 to receive from the lever 15 a movement towards the open configuration.

Preferably, the lever 15 is connected to the second portion 16b of the deformable body 16 by a two-directional connection such that, on the one hand, pressing the lever 15 causes the second portion 16b of the deformable body 16 to bend towards the open configuration and, on the other, the elastic return of the second portion 16b of the deformable body 16 towards the closed configuration tends to move the lever 15 towards the home position.

The connection between the lever 15 and the deformable body 16 is accomplished by a connecting element 19 illustrated in detail in Figures 8 to 10. The connecting element 19 has a first end which is stably connected to the second portion 16b of the deformable body 16 so as to pull the second portion 16b towards the lever 15. In other words, the open configuration of the second portion 16b of the deformable body 16 is defined by a movement of the second portion 16b away from the respective tank 3, 4 which in turn means a movement of the second portion 16b towards the lever 15.

The connecting element 19 also has a second end 19b, opposite the first end, which is rotationally connected to the lever 15. More in detail, the lever 15 has a cavity 24, formed for example by a pair of parallel ribs 25, within which the second end 19b of the connecting element 19 is slidably housed. The second end 19b of the connecting element 19 preferably has a substantially spherical outer profile which allows the connecting element 19 to rotate relative to the lever 15 about a plurality of different axes and, at the same time, to slide along the cavity 24. In other words, the connection between the second end 19b of the connecting element 19 and the lever 15 is of the sliding hinge type, preferably spherical.

Preferably, the lever 15 is hinged to the connector 21 at a point between a portion of the lever 15 designed to be pressed by a user and the point of connection between the lever 15 and the connector 21. That way, when the user presses the lever 15, the point of connection between the lever 15 and the connector 21 rises, which in turn causes the second portion 16b of the deformable body 16 to rotate relative to the first portion 16a about the joining line Z.

Advantageously, in the assembled configuration of the crushed-ice drink maker 1, the two levers 15 are positioned side by side and both levers 15 are designed to be pressed at the respective engagement portions 26 in order to open the valves 14.

Further, the two levers 15 are spaced from each other at a distance such that the two levers 15 can be pressed by a user simultaneously and independently, in particular using two different fingers of one hand (preferably index and middle fingers).

Preferably, the engagement portions 26 of the two levers 15 are spaced from each other at a distance of at least, and preferably more than, 0.5 cm and still more preferably between 1.5 cm and 2.5 cm

In use, a user can quickly and easily obtain a mixture of two different iced drinks contained in the two tanks 3, 4, by simply placing a glass cup under the shared outfeed section, that is to say under the spouts 22 and suitably operating the two levers 15.

More specifically:
- the two levers can be operated alternately to obtain a drink consisting of two or more alternate layers of the two drinks;
- the two levers can be operated simultaneously to dispense a ready mixture consisting of equal quantities of the two drinks (the two drinks mix as soon as they come into contact in the shared outfeed section);
- the two levers can be operated simultaneously to different extents in order to reduce the quantity of one of the two drinks, thereby varying the concentration of one of the two drinks in the resulting mixed drink.

The invention achieves the preset aims and overcomes the above mentioned disadvantages of the prior art.

The configuration of the crushed-ice drink maker with two dispensing control levers placed side by side and able to be operated with only one hand allows the user to dispense the content of each tank quickly and easily and even simultaneously.

Moreover, the drink dispensed, which is made from two different drinks, may be dispensed in ready-mixed form and does not require further mixing. This advantage is particularly important when the glass cup is filled nearly to the brim. Furthermore, each lever is associated with one drink only. The proportions of the two drinks dispensed can therefore be adjusted in real time, with the possibility of dispensing the drinks in different, precisely determined proportions at any time, with obvious advantages in terms of flexibility of use.

## Claims

1. A crushed-ice drink maker comprising:
- a first tank (3) for containing a first iced drink;
- a second tank (4), separate from the first tank (3), for containing a second iced drink;
- dispensing means (12, 13, 14) connected to the first and second tanks (3, 4) and designed to dispense the iced drinks from the first and second tanks (3, 4) towards the same shared dispensing station; the dispensing means (12, 13, 14) comprising a shared dispenser (13), a pair of connecting ducts (12) each interposed between the shared dispenser (13) and a respective tank (3, 4) for putting the shared dispenser (13) in fluid communication with the tank (3, 4), and valve means (14) acting on the connecting ducts (12) for allowing and interrupting independently of each other the fluid communication between the shared dispenser (13) and the tanks (3, 4), said valve means comprising, for each connecting duct (12), a valve (14) applied to an end portion of said connecting duct (12) on the opposite side relative to the tank (3, 4) and settable to a plurality of operating configurations between a closed configuration where it completely obstructs the flow of the drink in the respective connecting duct (12), and an open configuration where it allows the drink to flow through the connecting duct (12) so it can be dispensed; said valve (14) comprising a connector (21) which can be stably connected to said end portion of the connecting duct (12), the connector (21) having an opening through which the drink flows out of the connecting duct 12 to the outside, said opening defining a transit section of said connector (21); **characterised in that** each valve (14) comprises a closing element (16) comprising an elastically deformable body (16) shaped to fully seal said transit section of the connector (21), each valve (14) also comprising an actuator element (15) which a user can operate manually, acting on the deformable body (16) to switch said valve (14) between said open, closed and intermediate configurations.

2. The crushed-ice drink maker according to claim 1, wherein the connecting ducts (12) extend away from the respective tanks (3, 4) and have respective outfeed sections (12a) which are substantially opposite each other for dispensing respective flows of drink towards the shared dispensing station.

3. The crushed-ice drink maker according to claim 1 or 2, wherein the actuator elements (15) are positioned relative to each other in such a way that the user can operate them simultaneously with the fingers of one hand.

4. The crushed-ice drink maker according to claims 2 and 3, wherein each of the valves (14) is positioned at the outfeed section (12a) of the respective connecting duct (12).

5. The crushed-ice drink maker according to claim 3 or 4, wherein each actuator element (15) can move between a home position corresponding to the valve (14) closed configuration and a dispensing position corresponding to the valve (14) open configuration; the actuator element (15) also being designed to adopt a plurality of intermediate positions between the home and dispensing positions, corresponding to valve (14) intermediate configurations between the open configuration and the closed configuration, for partializing the drink drawn from the respective tank (3, 4) and dispensed through the shared dispensing duct (13)

6. The crushed-ice drink maker according to any foregoing claim, wherein the closing element (16) comprises a first portion (16a) fastened to the connector (21) and a second portion (16b) connected to the first portion (16a) along a joining line (Z) and acting on the transit section to block in a sealed fashion the respective connecting duct (12); the second portion (16b) of the closing element (16) being controlled by the actuator element (15) and moving relative to the first portion (16a) about the joining line (Z), defining the valve (14) open and closed configurations.

7. The crushed-ice drink maker according to claim 6, wherein the deformable body (16) able to move between a non-deformed configuration in which it blocks the transit section and an elastically deformed configuration in which the second portion (16b) is elastically deformed relative to the first portion (16a) about the joining line (Z) and at least partly opens the transit section, the second portion (16a) of the deformable body (16) being kept pushed in the closed configuration by the elastic return of the deformable body (16).

8. The crushed-ice drink maker according to claim 6 or 7, wherein the actuator element (15) comprises a lever (15) hinged to the connector (21) about a tilting axis (Y) which is transversal, preferably perpendicular, to the joining line (Z), and wherein the valve (14) also comprises a connecting element (19) interposed between the lever (15) and the second portion (16b) of the closing element (16) for making the second portion (16) of the closing element (16) rotate about the joining line (Z) following rotation of the lever (15) about the tilting axis (Y).

9. The crushed-ice drink maker according to claim 8, wherein the connecting element (19) has a first end (19a) which is rotationally integral with the second portion (16a) of the closing element (16) and a second end (19b), opposite the first end (19a), which is hinged to the lever (15), preferably by means of a sliding hinge.

10. The crushed-ice drink maker according to any of the foregoing claims, wherein each connector (21) comprises a lower outfeed portion pointing downwards to form a guide chute for the drink dispensed towards a container below, the two outfeed portions of the connectors (21) at least partly delimiting a shared dispensing duct for the drinks, positioned downstream of the connecting ducts (12) relative to a direction of flow of the drink dispensed.

11. The crushed-ice drink maker according to any of the foregoing claims, wherein each of the tanks (3, 4) is equipped with a respective dispenser (9, 10) put in fluid communication with said tank (3, 4) and not with the other tank (3, 4), the shared dispenser (13) forming a third dispenser for the crushed-ice drink maker (1).

## Patentansprüche

1. Zubereiter von Getränken aus zerstoßenem Eis umfassend:
- einen ersten Tank (3) zur Aufnahme eines ersten eisgekühlten Getränks;
- einen zweiten Tank (4), getrennt vom ersten Tank (3), zur Aufnahme eines zweiten eisgekühlten Getränks;
- Ausgabemittel (12, 13, 14), die mit dem ersten und zweiten Tank (3, 4) verbunden und ausgelegt sind, um die eisgekühlten Getränke aus dem ersten und zweiten Tank (3, 4) zur gleichen gemeinsamen Ausgabestation auszugeben; wobei die Ausgabemittel (12, 13, 14) einen gemeinsamen Spender (13), ein Paar Anschlussleitungen (12), die jeweils zwischen dem gemeinsamen Spender (13) und einem entsprechenden Tank (3, 4) gelagert sind, damit der gemeinsame Spender (13) in Fluidverbindung mit dem Tank (3, 4) gesetzt wird, und Ventilmittel (14) umfassen, die auf die Anschlussleitungen (12) einwirken, um die Fluidverbindung zwischen dem gemeinsamen Spender (13) und den Tanks (3, 4) unabhängig voneinander zu ermöglichen und zu unterbrechen, wobei die Ventilmittel, für jede Anschlussleitung (12), ein Ventil (14) umfassen, das an einem Endabschnitt der Anschlussleitung (12) auf der gegenüberliegenden Seite zum Tank (3, 4) angebracht ist und auf eine Vielzahl von Betriebskonfigurationen zwischen einer geschlossenen Konfiguration, in der es den Strom des Getränks in der jeweiligen Anschlussleitung (12) völlig behindert, und einer offenen Konfiguration einstellbar ist, in der es dem Getränk erlaubt, durch die Anschlussleitung (12) zu fließen, so dass es ausgegeben werden kann; wobei das Ventil (14) einen Verbinder (21) umfasst, der stabil mit dem Endabschnitt der Anschlussleitung (12) verbunden werden kann, wobei der Verbinder (21) eine Öffnung aufweist, durch die das Getränk aus der Anschlussleitung (12) nach außen herausfließt, wobei die Öffnung einen Durchgangsbereich des Verbinders (21) definiert; **dadurch gekennzeichnet, dass** jedes Ventil (14) ein Schließelement (16) umfasst, das einen elastisch verformbaren Körper (16) umfasst, der gestaltet ist, um den Durchgangsbereich des Verbinders (21) vollständig zu versiegeln, wobei jedes Ventil (14) auch ein Aktorelement (15) umfasst, das ein Benutzer manuell bedienen kann, indem er auf den verformbaren Körper (16) wirkt, um das Ventil (14) zwischen den offenen, geschlossenen und mittleren Konfigurationen zu schalten.

2. Zubereiter von Getränken aus zerstoßenem Eis nach Anspruch 1, wobei die Anschlussleitungen (12) sich weg von den jeweiligen Tanks (3, 4) erstrecken und entsprechende Auslaufbereiche (12a) aufweisen, die im Wesentlichen gegenüberliegend für die Ausgabe der jeweiligen Ströme des Getränks zur gemeinsamen Ausgabestation sind.

3. Zubereiter von Getränken aus zerstoßenem Eis nach Anspruch 1 oder 2, wobei die Aktorelemente (15) zueinander so positioniert sind, dass der Benutzer sie gleichzeitig mit den Fingern einer Hand bedienen kann.

4. Zubereiter von Getränken aus zerstoßenem Eis nach den Ansprüchen 2 und 3, wobei jedes der Ventile (14) am Auslaufbereich (12a) der jeweiligen Anschlussleitung (12) positioniert ist.

5. Zubereiter von Getränken aus zerstoßenem Eis nach Anspruch 3 oder 4, wobei sich jedes Aktorelement (15) zwischen eine Ausgangsposition, die der geschlossen Konfiguration des Ventils (14) entspricht, und eine Ausgabeposition, die der offenen Konfiguration des Ventils (14) entspricht, bewegen kann; wobei das Aktorelement (15) auch ausgelegt ist, um eine Vielzahl von mittleren Positionen zwischen den Ausgangs- und Ausgabepositionen, die den mittleren Konfigurationen des Ventils (14) zwischen der offenen Konfiguration und der geschlossenen Konfiguration entsprechen, zur Aufteilung des Getränks aufzunehmen, das aus dem jeweiligen Tank (3, 4) entnommen und durch die gemeinsame Ausgabeleitung (13) ausgegeben wird.

6. Zubereiter von Getränken aus zerstoßenem Eis nach einem der vorhergehenden Ansprüche, wobei das Schließelement (16) einen ersten Abschnitt (16a), der mit dem Verbinder (21) befestigt ist, und einen zweiten Abschnitt (16b) umfasst, der mit dem ersten Abschnitt (16a) entlang einer verbindenden Linie (Z) verbunden ist und auf den Durchgangsbereich wirkt, um in einer versiegelten Weise die jeweilige Anschlussleitung (12) zu blockieren; wobei der zweite Abschnitt (16b) des Schließelements (16) vom Aktorelement (15) gesteuert wird und sich relativ zum ersten Abschnitt (16a) um die verbindende Linie (Z) bewegt, indem die offenen und geschlossenen Konfigurationen des Ventils (14) definiert werden.

7. Zubereiter von Getränken aus zerstoßenem Eis nach Anspruch 6, wobei der verformbare Körper (16) in der Lage ist, sich zwischen eine nicht verformte Konfiguration, in der er den Durchgangsbereich blockiert, und eine elastisch verformte Konfiguration zu bewegen, in der der zweite Abschnitt (16b) relativ zum ersten Abschnitt (16a) um die verbindende Linie (Z) elastisch verformt ist und zumindest teilweise den Durchgangsbereich öffnet, wobei der zweite Abschnitt (16a) des verformbaren Körpers (16) in der geschlossenen Konfiguration durch die elastische Rückkehr des verformbaren Körpers (16) gedrückt gehalten wird.

8. Zubereiter von Getränken aus zerstoßenem Eis nach Anspruch 6 oder 7, wobei das Aktorelement (15) einen Hebel (15) umfasst, der am Verbinder (21) um eine Kippachse (Y) angelenkt ist, die transversal, vorzugsweise senkrecht, zur verbindenden Linie (Z) ist, und wobei das Ventil (14) auch ein Verbindungselement (19) umfasst, das zwischen dem Hebel (15) und dem zweiten Abschnitt (16b) des Schließelements (16) gelagert ist, damit der zweite Abschnitt (16) des Schließelements (16) um die verbindende Linie (Z) dreht und der Drehung des Hebels (15) um die Kippachse (Y) folgt.

9. Zubereiter von Getränken aus zerstoßenem Eis nach Anspruch 8, wobei das Verbindungselement (19) ein erstes Ende (19a), das mit dem zweiten Abschnitt (16a) des Schließelements (16) drehbar integral ist, und ein zweites Ende (19b) aufweist, gegenüber dem ersten Ende (19a), das am Hebel (15), vorzugsweise durch ein gleitendes Scharnier, angelenkt ist.

10. Zubereiter von Getränken aus zerstoßenem Eis nach einem der vorhergehenden Ansprüche, wobei jeder Verbinder (21) einen unteren Auslaufabschnitt umfasst, der nach unten zeigt, um eine Führungsrutsche für das Getränk zu bilden, das zu einem unteren Behälter ausgegeben wird, wobei die zwei Auslaufabschnitte der Verbinder (21) zumindest teilweise eine gemeinsame Ausgabeleitung für die Getränke abgrenzen, die nach den Anschlussleitungen (12) in Bezug auf eine Strömungsrichtung des ausgegebenen Getränks positioniert sind.

11. Zubereiter von Getränken aus zerstoßenem Eis nach einem der vorhergehenden Ansprüche, wobei jeder der Tanks (3, 4) mit einem jeweiligen Spender (9, 10) ausgestattet ist, der in Fluidverbindung mit dem Tank (3, 4) und nicht mit dem anderen Tank (3, 4) gesetzt wird, wobei der gemeinsame Spender (13) einen dritten Spender für den Zubereiter von Getränken aus zerstoßenem Eis (1) bildet.

## Revendications

1. Appareil de fabrication de boissons à base de glace pilée, comprenant :
- un premier réservoir (3) servant à contenir une première boisson glacée ;
- un second réservoir (4), séparé du premier réservoir (3), servant à contenir une seconde boisson glacée ;
- des moyens de distribution (12, 13, 14) reliés aux premier et second réservoirs (3, 4) et conçus pour distribuer les boissons glacées à partir des premier et second réservoirs (3, 4) vers le même poste de distribution commun ; les moyens de distribution (12, 13, 14) comprenant un distributeur commun (13), une paire de conduits de raccordement (12) chacun interposé entre le distributeur commun (13) et un réservoir respectif (3, 4) pour mettre le distributeur commun (13) en communication fluidique avec le réservoir (3, 4) et des moyens de valve (14) agissant sur les conduits de raccordement (12) pour permettre et interrompre, indépendamment de chacun d'eux, la communication fluidique entre le distributeur commun (13) et les réservoirs (3, 4), lesdits moyens de valve comprenant, pour chaque conduit de raccordement (12), une valve (14) appliquée à une partie terminale dudit conduit de raccordement (12) sur le côté opposé par rapport au réservoir (3, 4) et réglable à une pluralité de configurations de fonctionnement entre une configuration fermée où elle obstrue complètement l'écoulement de la boisson dans le conduit de raccordement (12) respectif, et une configuration ouverte où elle permet à la boisson de s'écouler à travers le conduit de raccordement (12) pour être distribuée ; ladite valve (14) comprenant un connecteur (21) pouvant être stablement relié à ladite partie terminale du conduit de raccordement (12), le connecteur (21) comportant une ouverture à travers laquelle la boisson sort du conduit de raccordement (12) vers l'extérieur, ladite ouverture définissant une section de transit dudit connecteur (21) ; **caractérisée en ce que** chaque valve (14) comprend un élément de fermeture (16) comprenant un corps élastiquement déformable (16) façonné pour étanchéifier totalement ladite section de transit du connecteur (21), chaque valve (14) comprenant aussi un élément actionneur (15), qu'un utilisateur peut actionner manuellement, agissant sur le corps déformable (16) pour faire passer ladite valve (14) entre lesdites configurations intermédiaires d'ouverture et de fermeture.

2. Appareil de fabrication de boissons à base de glace pilée selon la revendication 1, dans lequel les conduits de raccordement (12) se développent en s'éloignant des réservoirs respectifs (3, 4) et comportent des sections de sortie (12a) respectives étant substantiellement opposées les unes aux autres pour distribuer des écoulements de boisson respectifs vers le poste de distribution commun.

3. Appareil de fabrication de boissons à base de glace pilée selon les revendications 1 ou 2, dans lequel les éléments actionneurs (15) sont positionnés l'un par rapport à l'autre de manière à ce que l'utilisateur puisse les actionner simultanément avec les doigts d'une main.

4. Appareil de fabrication de boissons à base de glace pilée selon les revendications 2 et 3, dans lequel chacune des valves (14) est positionnée au niveau de la section de sortie (12a) du conduit de raccordement (12) respectif.

5. Appareil de fabrication de boissons à base de glace pilée selon les revendications 3 ou 4, dans lequel chaque élément actionneur (15) peut se déplacer entre une position initiale correspondant à la configuration de fermeture de la valve (14) et une position de distribution correspondant à la configuration d'ouverture de la valve (14) ; l'élément actionneur (15) étant aussi conçu pour adopter une pluralité de positions intermédiaires entre les positions initiale et de distribution, correspondantes à configurations intermédiaires de la valve (14) entre la configuration d'ouverture et la configuration de fermeture, pour diviser la boisson tirée du réservoir (3, 4) respectif et distribuée à travers le conduit de distribution commun (13).

6. Appareil de fabrication de boissons à base de glace pilée selon l'une quelconque des revendications précédentes, dans lequel l'élément de fermeture (16) comprend une première partie (16a) fixée au connecteur (21) et une seconde partie (16b) reliée à la première partie (16a) le long d'une ligne de jonction (Z) et agissant sur la section de transit pour bloquer de façon étanche le conduit de raccordement (12) respectif ; la seconde partie (16b) de l'élément de fermeture (16) étant commandée par l'élément actionneur (15) et se déplaçant par rapport à la première partie (16a) autour de la ligne de jonction (Z), définissant les configurations d'ouverture et de fermeture de la valve (14).

7. Appareil de fabrication de boissons à base de glace pilée selon la revendication 6, dans lequel le corps déformable (16) peut se déplacer entre une configuration non déformée dans laquelle il bloque la section de transit et une configuration déformée élastiquement dans laquelle la seconde partie (16b) est élastiquement déformée par rapport à la première partie (16a) autour de la ligne de jonction (Z) et au moins ouvre partiellement la section de transit, la seconde partie (16a) du corps déformable (16) étant maintenue appuyée dans la configuration de fermeture par le retour élastique du corps déformable (16).

8. Appareil de fabrication de boissons à base de glace pilée selon les revendications 6 ou 7, dans lequel l'élément actionneur (15) comprend un levier (15) monté articulé au connecteur (21) autour d'un axe incliné (Y) étant transversal, de préférence perpendiculaire, à la ligne de jonction (Z), et dans lequel la valve (14) comprend aussi un élément de raccordement (19) interposé entre le levier (15) et la seconde partie (16b) de l'élément de fermeture (16) pour faire tourner autour de la ligne de jonction (Z) la seconde partie (16b) de l'élément de fermeture (16) suite à la rotation du levier (15) autour de l'axe incliné (Y).

9. Appareil de fabrication de boissons à base de glace pilée selon la revendication 8, dans lequel l'élément de raccordement (19) comporte une première extrémité (19a) étant solidaire en rotation de la seconde partie (16a) de l'élément de fermeture (16) et une seconde extrémité (19b), opposée à la première extrémité (19a), étant montée articulée au levier (15), de préférence au moyen d'une charnière coulissante.

10. Appareil de fabrication de boissons à base de glace pilée selon l'une quelconque des revendications précédentes, dans lequel chaque connecteur (21) comprend une partie de sortie inférieure pointant vers le bas pour former un canal de guidage pour la boisson distribuée vers un récipient en-dessous, les deux parties de sortie des connecteurs (21) délimitant au moins partiellement un conduit de distribution commun pour les boissons positionné en aval des conduits de raccordement (12) par rapport à une direction d'écoulement de la boisson distribuée.

11. Appareil de fabrication de boissons à base de glace pilée selon l'une quelconque des revendications précédentes, dans lequel chacun des réservoirs (3, 4) est équipé d'un distributeur (9, 10) respectif placé en communication fluidique avec ledit réservoir (3, 4) mais pas avec l'autre réservoir (3, 4), le distributeur commun (13) formant un troisième distributeur pour l'appareil de fabrication de boissons à base de glace pilée (1).
